# EUROPEAN PATENT APPLICATION

(11) **EP 1 574 628 A1**
(43) Date of publication of application: **14.09.2005**
(21) Application number: 04380091.1
(22) Date of filing: 21.04.2004
(51) Int. Cl.: E03B 11/02

(54) **Installation in buildings for the autonomous supply of mineral water**

(30) Priority: 11.03.2004 ES 200400655 U
(71) Applicant: Patrocinio Polo, Hugo, 06004 Badajoz (ES)
(72) Inventor: Patrocinio Polo, Hugo, 06004 Badajoz (ES)
(74) Representative: Gil-Vega, Victor

(57) **Abstract**

This invention relates to a tank and supply system for the transport and storage of mineral water and the preservation of its properties. It comprises an installation having an exterior supply point (1) which delivers the water to a tank (2) of appropriate material housed within the building and a distribution system for mineral water from the tank (2) to each point of consumption where individual taps (5) are fitted with their corresponding meters (10).

The installation also includes the devices necessary for monitoring this such as a level sensor (9), safety drain (7) and filling valve. Likewise if weather conditions make it necessary the water tank includes refrigeration equipment (6) which keeps the temperature of the mineral water within an appropriate range.

## Description

### SCOPE AND BACKGROUND OF THE INVENTION

Specifically this description relates to a tank and supply system appropriate for the transport and storage of mineral water and its properties.

This invention finds application in dwellinghouses, hospitals, colleges, residential buildings or any type of building, either public or private, which houses autonomous installations for the supply of mineral water through conventional taps located at points of consumption.

It is recognised by all that mineral water is the most refreshing and cheapest drink and the one which occupies the greatest shelf space in supermarkets. In Spain 2000 sources provide mineral water, with an annual growth of 4.7%.

Mineral water is a symbol of healthy quality nutrition. Thus society is increasingly convinced of the properties of mineral water, which in general encourages better digestion and good kidney function. Its use is particularly appropriate in the most sensitive populations, children and the elderly.

Of the various varieties, those most appreciated are those which are light and without taste. That is, with little mineral content, low in sodium and with a balance between all their components, as indicated by the chemical analyses performed.

The use of mineral water has become widespread given that in addition there arise situations involving droughts, risk of contact with disease, or merely the fact that the properties of mains water are not suitable for consumption by sensitive persons or persons not accustomed to it.

On the other hand the problems caused by the transport of bottled water and the need for space for its storage in our kitchens and larders, and the inconvenience caused by the space which it requires, are obvious.

Thus the "Installation in buildings for the autonomous supply of mineral water" constitutes an invention in comparison with the state of the art which makes it possible to benefit from all the advantages of the consumption of mineral water in our buildings while avoiding all the problems with the purchase of bottles.

### DESCRIPTION OF THE INVENTION

The "Installation in buildings for the autonomous supply of mineral water" comprises an exterior supply point which delivers the water to a tank of appropriate material housed in the building and a distribution network for the mineral water from the tank to each consumption point where a tap and its corresponding meter is fitted.

The mineral water tank must contain the means necessary for monitoring it, such as a level sensor, safety drain and filling valve. Likewise, if weather conditions make it necessary, the water tank will include a cooling facility which will keep the temperature of the mineral water within an appropriate range.

Alternatively, where necessary the "Installation in buildings for the autonomous supply of mineral water" may include delivery pumps to ensure that the mineral water reaches the points of consumption at the pressure necessary.

The entire installation must guarantee that the mineral water is not in contact with the outside atmosphere until it reaches the points of consumption and that the materials with which the mineral water comes into contact will not adversely affect its properties.

This invention may also apply to installation in buildings for the supply of water with similar qualities to mineral water, such as water originating from springs, or drinking water, for example drinking water in common use or from boreholes, which has been treated through purification systems or from which impurities or lime has been filtered out.

Thus the characteristic features of the tanks and installation to which this invention relates ensure that, as in the case of mineral water, these liquids which have specific properties preserve them, from extraction or the purification system until they are consumed by the user.

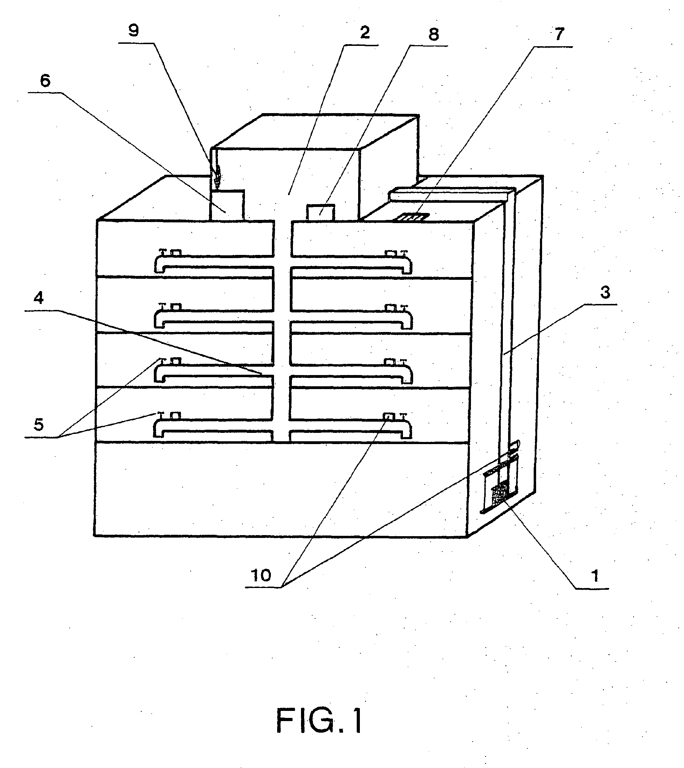

### DESCRIPTION OF THE FIGURE

In order to describe an embodiment of the invention of the "Installation in buildings for the autonomous supply of mineral water", a figure is shown below in which a practical embodiment of the invention described is illustrated:
Figure (1): Example of the "Installation in buildings for the autonomous supply of mineral water".
In this figure the numbered items are listed below:
   (1): Exterior supply point
   (2): Tank
   (3): Filling piping
   (4): System of delivery pipes
   (5): Taps
   (6): Cooling equipment
   (7): Discharge to the drains
   (8): Access hatch
   (9): Level sensor
   (10): Meters

### PREFERRED EMBODIMENT OF THE INVENTION

As an example of a preferred embodiment of the "Installation in buildings for the autonomous supply of mineral water", a 4 storey building with 2 dwellings per storey may be fitted with an exterior supply point (1) at ground level where tankers unload, a tank (2) of polyethyleneterephthalate housed on the roof of the building, the pipe (3) for filling the tank from the supply point and a system of delivery piping (4) from the tank to the taps (5) located at the points of consumption.

The tank is provided with cooling equipment (6), a discharge to the drains (7), an access hatch (8) for maintenance work and a level sensor (9).

The internal system ensures that the mineral water will not come into contact with the external atmosphere in any circumstances, and likewise all the plumbing installation in contact with the mineral water will be made of stainless steel.

Meters (10) are installed on both the filling pipe and the taps located in each dwelling in order to measure levels of consumption.

It is not felt that any further description is necessary as anyone skilled in the art will understand the scope of the invention and the advantages deriving therefrom. The materials, shape, size and arrangement of the elements used in the embodiment of the invention may be subject to variation without this giving rise to any change in the essential nature of the invention.

## Claims

1. Installation in buildings for the autonomous supply of mineral water **characterised in that** it comprises a set of plumbing components such as will not adversely affect the property of the mineral water comprising: an external supply point (1) at ground level where tankers unload, a tank (2) of suitable material housed in the building itself, the pipe (3) for filling the tank from the supply point and a system of delivery pipes (4) from the tank to the taps (5) located at the points of consumption.

2. Installation in buildings for the autonomous supply of mineral water according to Claim 1, **characterised in that** the tank is provided with refrigeration equipment (6), a discharge to the drains (7), an access hatch (8) and a level sensor (9).

3. Installation in buildings for the autonomous supply of mineral water according to Claims 1 and 2,
**characterised in that** it includes consumption meters (10) in both the filling pipe and at the taps housed in each dwelling.

4. Installation in buildings for the autonomous supply of mineral water according to Claims 1, 2 and 3, **characterised in that** delivery pumps may be fitted to ensure that the mineral water reaches the points of consumption at the necessary pressure.
